(19) **Europäisches Patentamt / European Patent Office / Office européen des brevets**

(11) **EP 1 888 702 B1**

(12) # EUROPEAN PATENT SPECIFICATION

(45) Date of publication and mention
of the grant of the patent:
**29.05.2013 Bulletin 2013/22**

(21) Application number: **06754215.9**

(22) Date of filing: **08.06.2006**

(51) Int Cl.:
**C09J 103/02** (2006.01)

(86) International application number:
**PCT/EP2006/005469**

(87) International publication number:
**WO 2006/131350 (14.12.2006 Gazette 2006/50)**

(54) **ADHESIVE COMPOSITION**

KLEBSTOFFZUSAMMENSETZUNG

COMPOSITION ADHESIVE

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.06.2005 EP 05253510**

(43) Date of publication of application:
**20.02.2008 Bulletin 2008/08**

(73) Proprietor: **Cargill, Incorporated
Wayzata, MN 55391 (US)**

(72) Inventors:
- **ANIC, Jure**
  **47798 Krefeld (DE)**
- **WOLF, Elvira**
  **NL-47804 Krefeld (DE)**
- **ANDRIESSEN, Freddy, Johannes, Martina**
  **NL-4561 Hulst (NL)**

(74) Representative: **Wilkinson, Stephen John et al
Stevens, Hewlett & Perkins
1 St. Augustine's Place
Bristol BS1 4UD (GB)**

(56) References cited:
**EP-A- 0 533 031    CH-A- 203 147
GB-A- 2 001 332**

- **DATABASE CHEMABS CHEMICAL ABSTRACTS SERVICE, COLUMBUS, OHIO, US; "Production of mixed starch adhesive for corrugated paperboard" XP002348437 retrieved from STN Database accession no. 132:94915 & CN 1 174 223 A (PEOP. REP. CHINA) 25 February 1998 (1998-02-25) & DATABASE WPI Section Ch, Week 200173 Derwent Publications Ltd., London, GB; Class A81, AN 2001-626796 & CN 1 174 223 A (MA H) 25 February 1998 (1998-02-25)**
- **PATENT ABSTRACTS OF JAPAN vol. 015, no. 132 (C-0819), 29 March 1991 (1991-03-29) & JP 03 012470 A (NIPPON KOONSUTAAC KK), 21 January 1991 (1991-01-21) & DATABASE WPI Section Ch, Week 199109 Derwent Publications Ltd., London, GB; Class F09, AN 1991-062744 & JP 03 012470 A (NIPPON CORN STARCH) 21 January 1991 (1991-01-21) & DATABASE CHEMABS CHEMICAL ABSTRACTS SERVICE, COLUMBUS, OHIO, US; "Carrier-type starch adhesives for corrugated boards" retrieved from STN Database accession no. 114:166659 & JP 03 012470 A (NIHON CORNSTARCH K.K.) 21 January 1991 (1991-01-21)**
- **PATENT ABSTRACTS OF JAPAN vol. 2002, no. 12, 12 December 2002 (2002-12-12) & JP 2002 226809 A (RENGO CO LTD), 14 August 2002 (2002-08-14) & DATABASE WPI Section Ch, Week 200323 Derwent Publications Ltd., London, GB; Class A81, AN 2003-233401 & JP 2002 226809 A (RENGO CO LTD) 14 August 2002 (2002-08-14) & DATABASE CHEMABS CHEMICAL ABSTRACTS SERVICE, COLUMBUS, OHIO, US; "Starch pastes for binding corrugated boards" retrieved from STN Database accession no. 137:126685 & JP 2002 226809 A (RENGO CO LTD) 14 August 2002 (2002-08-14)**

**(Cont. next page)**

EP 1 888 702 B1

- **PATENT ABSTRACTS OF JAPAN vol. 015, no. 052 (C-0803), 7 February 1991 (1991-02-07) & JP 02 281090 A (SANWA DENPUN KOGYO KK), 16 November 1990 (1990-11-16) & DATABASE WPI Section Ch, Week 199101 Derwent Publications Ltd., London, GB; Class A81, AN 1991-003870 & JP 02 281090 A (SANWA DENPUN KOGYO) 16 November 1990 (1990-11-16) & DATABASE CHEMABS CHEMICAL ABSTRACTS SERVICE, COLUMBUS, OHIO, US; "Non-carrier starch as adhesive for corrugated boards" retrieved from STN Database accession no. 114:124848 & JP 02 281090 A (SANWA DENPUN KOGYO K.K.) 16 November 1990 (1990-11-16)**
- **PATENT ABSTRACTS OF JAPAN vol. 2000, no. 09, 13 October 2000 (2000-10-13) & JP 2000 160119 A (OJI CORNSTARCH KK), 13 June 2000 (2000-06-13) & DATABASE WPI Section Ch, Week 200039 Derwent Publications Ltd., London, GB; Class A11, AN 2000-446967 & JP 2000 160119 A (OJI CORN STARCH CO LTD) 13 June 2000 (2000-06-13) & DATABASE CHEMABS CHEMICAL ABSTRACTS SERVICE, COLUMBUS, OHIO, US; "Carrier-type starch adhesives for manufacture of corrugated boards and their preparation" retrieved from STN Database accession no. 133:19011 & JP 2000 160119 A (OJI CORN STARCH CO., LTD) 13 June 2000 (2000-06-13)**
- **N. SPASSKI: "Leim alkalischer Behandlung" CHEM. ZENTR., vol. I, 1938, page 3294, XP008053417**
- **PATENT ABSTRACTS OF JAPAN vol. 007, no. 259 (C-195), 18 November 1983 (1983-11-18) & JP 58 141268 A (NICHIDEN KAGAKU KK), 22 August 1983 (1983-08-22) & DATABASE CA CHEMICAL ABSTRACTS SERVICE, COLUMBUS, OHIO, US; retrieved from STN Database accession no. 100: 70252 & DATABASE WPI Week 198339 Derwent Publications Ltd., London, GB; AN 1983-774227 & JP 58 141268 A (NICHIDEN KAGAKU KK) 22 August 1983 (1983-08-22)**
- **DATABASE CA CHEMICAL ABSTRACTS SERVICE, COLUMBUS, OHIO, US; XP002401674 retrieved from STN Database accession no. 96: 183151 & PL 109 587 B (CENTRALNE LABORATORIUM PRZEMAYSLU ZIEMNIACZANEGO) 30 June 1980 (1980-06-30)**

**Description**

Field of the Invention

The present invention relates to adhesive compositions, in particular to so-called one-bag-mix (OBM) adhesive compositions, and to a process for preparing them.

Background of the Invention

Adhesives for use in the paper processing and corrugating industries are typically classified as either Stein Hall or Minocar type adhesives.

Stein Hall type adhesives are prepared by dispersing about 10-25% of the total starch in a primary liquid (water). This portion of the total starch is called "primary starch". The mix is heated and a defined amount of alkali is then added. This leads to full gelatinisation of the primary starch, resulting in a high viscosity starch paste (known as "carrier"). Secondary water is then incorporated to reduce the temperature and alkali concentration of the carrier. Finally, a secondary starch (accounting for about 75-90% of the total starch) is added, together with other compounds such as borax if required.

By contrast, Minocar type adhesives are prepared with much higher levels of primary starch (approximately 40-60% of the total starch). Alkali is added gradually to the carrier until a defined viscosity level is achieved. Once this viscosity level is reached, the swelling of the carrier is stopped by very quickly adding the remaining (secondary) liquid and starch (plus other compounds, if required).

Both these types of adhesives suffer from the drawback that they have to be prepared by the user, thereby requiring not only additional time resources and equipment but also a certain level of technical expertise. A third type of adhesive has therefore been developed. These are known as "one-bag-mix" (OBM) adhesives. They provide a single dry ingredient pre-mix that can be prepared in a straightforward one-step process, simply by adding to water.

OBM adhesives have been available on the market for more than forty years. They typically comprise, together with caustic producing chemicals and a boron compound, both a carrier and a secondary starch. Whereas the secondary starch is usually a native starch with a relatively high gelatinisation temperature (e.g. about 70°C in the case of corn starch), OBM carrier starches are traditionally selected from pre-gelatinised (or "roll-dried") starches. Unfortunately, the use of such starches is very costly.

JP-A-3012470 discloses an adhesive containing (A) raw starch as a main portion starch component, (B) low viscous α starch as a carrier portion starch component and (C) an inorganic salt.

CN-A-1174223 discloses a starch adhesive for the preparation of corrugated paperboard, the adhesive is prepared by mixing water and flour, adding corn starch, mixing with NaOH solution and borax solution, stirring and settling for 8 hours.

An alternative to the products that exist in the art is therefore required. The present invention provides such an alternative.

Brief Description of the Figures

    **Figure 1:** Alkali sensitivity of different starches at 25°C
    **Figure 2:** Alkali sensitivity of different starches at varying temperatures
    **Figure 3:** Alkali Brabender value determination of corn and wheat starch
    **Figures 4 + 5:** Characteristics of adhesives prepared according to different processes
    **Figure 6:** Apparatus for gel-point determination

**Statements of the Invention**

According to a first aspect of the present invention, there is provided a dry adhesive composition comprising a carrier starch, a secondary starch and an alkali characterised in that the carrier starch:

-    comprises, on a dry weight basis, less than 50% pre-gelatinised starch; and

[0012]    - has a higher alkali sensitivity, calculated according to method 1 as set out below, than the secondary starch. The difference in alkali sensitivity between the carrier starch and the secondary starch is at least 0.05% NaOH, preferably 0.1% NaOH, more preferably at least 0.15% NaOH.

According to a further aspect of the present invention, there is provided a process for preparing an adhesive comprising the steps of adding the above composition to water and mixing, characterised in that sufficient alkali is added to gelatinise the carrier starch but not the secondary starch during mixing.

According to a yet further aspect of the present invention, there is provided a process for preparing an adhesive comprising the steps of adding a carrier starch, a secondary starch and at least an alkali to water and mixing, characterised in that the carrier starch:

- comprises, on a dry weight basis, less than 50% pre-gelatinised starch; and
- has a higher alkali sensitivity, calculated according to method 1 as set out below, than the secondary starch;

and in that sufficient alkali is added to galatinise the carrier starch but not the secondary starch during mixing.

The difference in alkali sensitivity between the carrier starch and the secondary starch is at least 0.05% NaOH.

Preferably, before addition of the starches and alkali, the water is pre-heated to 20-60°C, preferably 30-50°C, more preferably 35-45°C, more preferably 40-45°C.

There is further provided an adhesive prepared according to the above process and board materials prepared using such an adhesive.

Detailed Description

The present invention provides an adhesive composition comprising a carrier starch, a secondary starch and an alkali characterised in that the carrier starch:

- comprises, on a dry weight basis, less than 50% pre-gelatinised starch; and
- has a higher alkali sensitivity than the secondary starch.

As used in the art, the term "adhesive composition" can refer to both dry and aqueous adhesive compositions. Dry compositions (e.g. of the one-bag-mix type) comprise some or all of the ingredients required to produce an aqueous composition by addition of water and/or other liquids. The ingredients of an aqueous compositions may be only partially diluted or they may be fully diluted and ready for use.

For the purpose of clarity alone, and unless specifically stated otherwise, dry compositions shall be referred to herein as "adhesive compositions" and aqueous compositions shall be referred to simply as "adhesives". Preferably, the adhesive composition of the present invention is a one-bag-mix type adhesive composition.

The adhesive composition of the present invention comprises, as a minimum, a carrier starch, a secondary starch and an alkali. The principal role of the carrier starch, in the finished adhesive, is to create a certain level of viscosity thereby allowing for a stable dispersion (or "suspension") of the raw, ungelatinised secondary starch. This is traditionally achieved, for OBM-type adhesives, by using a pre-gelatinised (and therefore cold-water-soluble) carrier starch.

The carrier starch of the present invention, however, comprises less than 50% pre-gelatinised starch. As used herein, the expression "dry weight basis" refers to the content of an ingredient (in this case pre-gelatinised starch) expressed as a percentage of the total dry weight of the composition (in this case of the carrier starch), calculated from the commercial basis dry weight of that ingredient. Preferably, the carrier starch will comprise less than 40%, more preferably less than 30%, more preferably less than 20%, more preferably less than 10%, more preferably less than 5% pre-gelatinised starch. According to a most preferred embodiment, the carrier starch will comprise substantially no pre-gelatinised starch. Instead, the carrier starch of the present invention is characterised by its alkali sensitivity, specifically by an alkali sensitivity which is significantly higher than that of the secondary starch.

It is indeed believed that, at a certain concentration and when mixed with water, the alkali will only gelatinise the more sensitive carrier starch. The secondary starch will not be attacked. Instead, the secondary starch will gelatinise during or after application of the adhesive, under the action of heat and/or pressure (e.g. on a corrugating machine) to produce a starch paste with a drastically increased viscosity. It is this increase in viscosity which leads to the formation of an adhesive bond.

In theory, provided the above sensitivity criteria are met and with the proviso that the carrier starch comprises less than 50% pre-gelatinised starch, both the carrier and secondary starches may be selected from any native or modified starches or starch derivatives (including, for instance, esterified, etherified or thinned starches). According to one preferred embodiment, the carrier starch will be a carboxy-methylated starch.

The carrier starch and the secondary starch will be chosen such that the difference in alkali sensitivity between the two is at least 0.05% NaOH, preferably 0.1% NaOH, more preferably at least 0.15% NaOH (wherein alkali sensitivity is measured according to Method 1 as set out below). Thus, for example, if corn starch is selected as the secondary starch, the carrier starch may be any one or more of wheat starch, potato starch, tapioca starch and barley starch. It should be noted, however, that corn starches with significantly different alkali sensitivities do exist. It would therefore be possible for both the carrier and secondary starches to be derived from corn (or from any other source which produces starches with significantly different alkali sensitivities, e.g. tapioca or potato). Nonetheless, if corn starch is selected as the secondary starch, the carrier starch will preferably be wheat starch.

By way of illustration only, the following table (simplified from Kofler, "Starch: Chemistry and Technology", 2nd edition - 1984, page 668, Table III) gives the standard gelatinisation temperatures of a number of commonly available starches.

| Starch type | Gelatinization temperature (°C) |
|---|---|
| Corn | 62 - 72 |
| Sorghum | 68 - 78 |
| Wheat | 58 - 64 |
| Tapioca - Brasilian | 49 - 64,5 |
| Tapioca- Dominican | 58,5 - 70 |
| Tapioca - Siamese | 62 - 73 |
| Potato | 50 - 68 |
| Waxy maize | 63 - 72 |
| Waxy sorghum | 67,5 - 74 |
| Barley | 51,5 - 59,5 |
| Rye | 57 - 70 |
| Pea (green garden) | 57 - 70 |
| Rice | 68 - 78 |
| High amylase corn | 67 - * (complete gelatinisation not effected in boiling water) |

The same differences, shifted to lower values, can be observed when the starches are suspended in water under alkali conditions. For the purpose of the present invention, however, Method 1 (as defined below) will be used to determine differences in alkali sensitivity.

Examples of some preferred carrier/secondary starch combinations include:

| Carrier Starch | Secondary Starch |
|---|---|
| Native wheat starch | Native corn starch |
| Native potato starch | Native corn starch |
| Native potato starch | Native wheat starch |
| CMS* potato starch | Native wheat starch |
| CMS potato starch | Native potato starch |
| Native potato + native wheat starch | Native corn starch |
| CMS* potato + native wheat starch | Native corn starch |
| * CMS = carboxy-methylated starch | |

The exact composition of the final adhesive will of course depend on its desired characteristics (such as total dry substance), intended end-use and the inclusion, for instance, of synthetic binders, hydrocolloids, thickeners and other chemical additives. Nonetheless, a preferred composition will comprise, on a dry weight basis, 0.5-60%, preferably 5-40%, more preferably 5-25%, more preferably 5-15% carrier starch and 40-99.5%, preferably 75-95%, more preferably 80-90% secondary starch.

The adhesive composition will also comprise an alkali. The alkali may be selected from one or more of sodium carbonate, calcium hydroxide, sodium hydroxide and other suitable alkali compounds known to those skilled in the art. According to a preferred embodiment, the adhesive composition will comprise sodium carbonate and calcium hydroxide which, when added to water, react to form caustic soda (according to the formula $Na_2CO_3 + Ca(OH)_2 = 2\ NaOH + CaCO_3$). Preferably, the composition will comprise alkali in an amount, on a dry weight basis, of 1-8%, more preferably in an amount of 3-6%.

The composition may also comprise a boron compound. Boron compounds are used as rheology regulators and adhesion boosters and may be selected from one or more of borax decahydrate, boric acid, borate and other boron compounds known to the skilled person. According to a preferred embodiment of the present invention, the boron compound will be borax decahydrate. Preferably, the composition will comprise boron compounds in an amount, on a dry weight basis, of 0.1-3.5%, more preferably of 0.5-2.5%, more preferably of 1.2-1.7%.

Thus, according to one preferred embodiment, the adhesive composition of the present invention will comprise a carrier starch, a secondary starch, a alkali and a boron compound, characterised in that the carrier starch comprises less than 50% pre-gelatinised starch and has a higher alkali sensitivity than the secondary starch. Upon addition of this composition to batch water, the alkali will attack the carrier starch causing it to swell. By contrast, at this stage, the lower sensitivity secondary starch will not swell.

Accordingly, the present invention further provides a process for preparing an adhesive comprising the steps of adding the basic composition defined above to water and mixing, characterised in that sufficient alkali is added to gelatinise the carrier starch but not the secondary starch during mixing.

The invention further provides a process for preparing an adhesive comprising the steps of adding a carrier starch, a secondary starch and at least an alkali to water and mixing, characterised in that the carrier starch:

- comprises, on a dry weight basis, less than 50% pre-gelatinised starch; and
- has a higher alkali sensitivity, calculated according to method 1 as set out below, than the <u>secondary</u> starch;

and in that sufficient alkali is added to gelatinise the carrier starch but not the secondary starch during mixing.

The difference in alkali sensitivity between the carrier starch and the secondary starch is at least 0.05% NaOH. Preferably, the carrier starch and secondary starch are pre-mixed.

Preferably, the ratio of water to other ingredients will be determined such that the total dry substance of the final adhesive is 15-40% by weight, preferably 20-35% by weight, more preferably, 20-30% by weight.

The gelatinisation of any given starch, in the presence of an alkali, is dependant on a number of factors, and in particular on water temperature and alkali concentration. These factors will have to be determined, amongst others, in accordance with the type of carrier starch and secondary starch being used in the process of the invention and with the gelatinisation temperature of the final adhesive in mind. Thus, for example, the higher the required gel-point of the adhesive, the less alkali will be needed and the higher the temperature of the batch water should be.

Preferably, the water will be pre-heated to 20-60°C, more preferably to 30-50°C, more preferably to 35-45°C, most preferably to 40-45°C; the quantity and type of alkali to be used will be readily determined by the skilled person but will preferably be between 1 and 8%, more preferably between 3 and 6%, on a dry weight basis. Examples of alkali compounds that may be used are defined above.

In addition to the above factors, the carrier starch should be given enough time to swell before the adhesive is used. The water, carrier starch, secondary starch, alkali and any other optional ingredients should therefore preferably be mixed for at least 10 min, more preferably for 10 min to 1 hour, more preferably for 20-40 min, more preferably for approximately 30 minutes. According to one embodiment, the carrier and secondary starches may be mixed with the water before the alkali, boron compounds and/or other optional ingredients are added.

The liquid composition thus prepared will be ready for use. Thus, the present invention further provides an adhesive prepared according to the above process. Such adhesives may be used in any number of applications including, in particular, in corrugating and/or paper processing applications. The invention therefore also provides products prepared using the above adhesive. These products (generally referred to as "board materials") include, for example, corrugated board and multilayer paper materials.

<u>Advantages of the Invention</u>

A number of advantages are associated with the adhesive composition of the present invention. In particular, they are simple to prepare (compared to typical Stein Hall or Minocar type adhesives), requiring less time, equipment and technical expertise. They can be delivered as a one-bag-mix but do not rely on the use of a chemically modified pre-gelatinised carrier starch. They are therefore cheaper, safer and more environmentally-friendly to make and use. In fact, the carrier starch of the present invention may be a native starch which is, in effect, generated *in situ* during the mixing process. They have good adhesive functionality and desirable rheological properties (such as a relatively short structure, stable viscosity, good runability and a thixotropic behaviour). In this respect, they are comparable to traditional Minocar type adhesives. Industrial scale corrugating trials have also shown that use of the present adhesive leads to better board quality (e.g. flatter plates, less curling, etc.), decreased glue consumption and increased production speed.

Method 1: Test Method for Alkali Sensitivity of Starches

1. Prepare a first batch of 500g of starch slurry at 10% solids (on a dry weight basis) by adding 50g starch to a 600 ml glass beaker containing 450g distilled water. The solution should be continuously stirred with a magnetic stick and kept at 25°C (+/- 1°C);
2. Determine the Stein Hall (SH) viscosity of the slurry (this should be close to that of water, i.e. 15-16 sec.);
3. Prepare a solution of NaOH at 20% solids (on a dry weight basis);
4. Calculate the amount of NaOH solution required in order to dose exactly 0.375 % NaOH (ds.) w/w to the 500g of slurry;
5. Add the calculated amount of NaOH to the slurry slowly but in one go. Continue stirring for exactly 10 minutes;
6. Determine the SH viscosity of the alkali slurry. Discard this first batch;
7. Repeat steps 1 to 6 with a second batch, but increase the NaOH concentration at step 4 to 0.4% (ds.) w/w;
8. Continue the procedure (i.e. increasing NaOH concentration) until a very strong viscosity is obtained;
9. Prepare a graph of viscosity vs. alkali concentration and determine the starting point of starch gelatinisation.

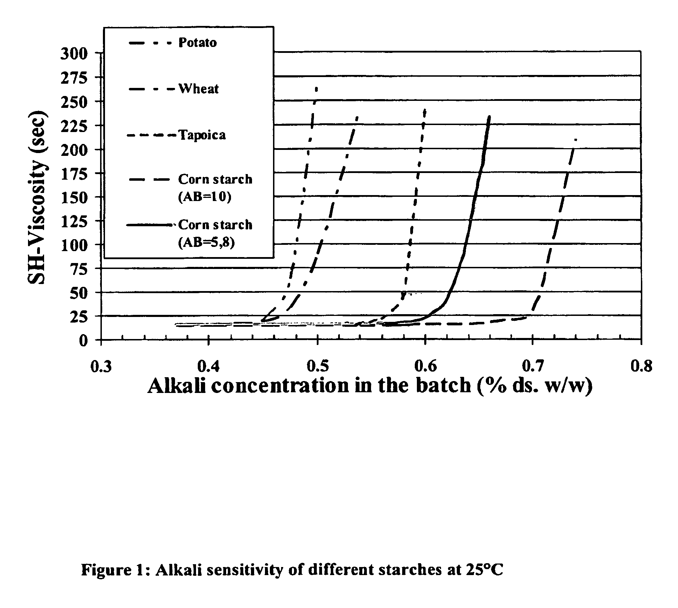

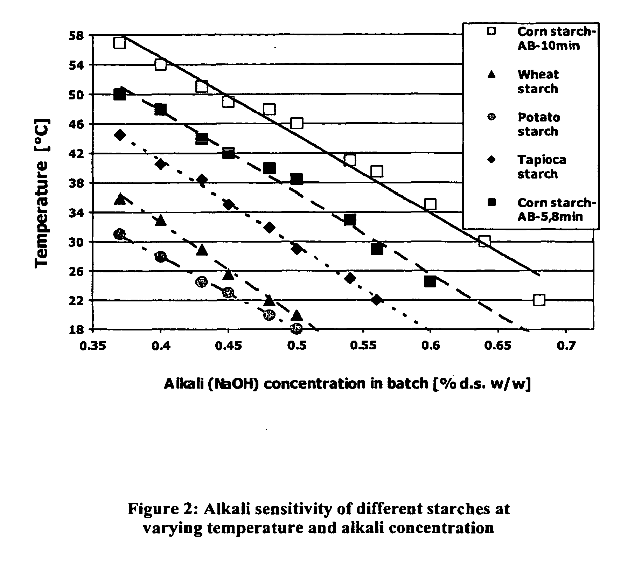

A number of commonly used starches were analysed in this way. The results are shown in the graph of Figure 1. As can be seen from this graph, potato starch and wheat starch need much less alkali (0.45% w/w) to start gelatinisation than corn starch (0.58% w/w). In other words, both potato and wheat starch have a higher alkali sensitivity than corn starch.
Since temperature also affects gelatinisation properties, a further analysis can be performed as illustrated in the graph of Figure 2. This graph shows the behaviour of different starches in relation to both alkali concentration and temperature. It allows a precise estimation, for each starch type and at a certain alkali concentration, of the gelatinisation temperature (i.e. of the temperature at which swelling begins). The graph was prepared by repeating the method described above (for Figure 1) at different temperatures and by plotting, for each alkali concentration, the exact temperature at which an increase in viscosity was first observed. A difference in alkali sensitivity between two starch types can then be established by comparing, at any given temperature, the different concentration of alkali required to initiate gelatinisation.
Thus, it can be seen that, for example at 38°C, wheat starch requires 0.355 % ds w/w NaOH to begin gelatinisation whereas a corn starch (AB 5.8 min) requires 0.49 % ds w/w NaOH: wheat starch has a higher alkali sensitivity than corn starch. The difference in alkali sensitivity between these two starch types is approximately 0.135 % ds w/w NaOH.

Method 2: Alkali Brabender method for determining alkali sensitivity

An alternative definition for the alkali sensitivity of starches used in the corrugating industry is the Alkali Brabender (AB) value. The AB value of any particular starch is the time taken by that starch to reach 100 Brabender Units (BU) under strictly defined conditions:
1. Start-up and calibrate a Viscograph E viscometer (Brabender) according to the supplier's instruction manual. The following parameters should be set: measurement torque (250 cmg), recorder speed (1cm/min), revolution speed (75 rpm), starting temperature (17°C), nominal temperature (50°C), heating rate (1.5°C/min), chart speed (1 cm/min). A 350 cmg cartridge should be used.
2. Place a 600 ml squat glass beaker on the laboratory balance and zero the balance.
3. Weigh out a starch sample to the nearest 0.01 g, using the following formula:

| Corn | Wheat | Potato |
|---|---|---|
| m = ( 25 x 88 ) / d.s. | m = ( 25 x 88 ) / d.s. | m = ( 25 x 82 ) / d.s. |

where m is the weight of the starch sample, expressed in g and d.s. is the dry substance of the starch, expressed in percent w:w.
4. Add precisely (445 - m) g of refrigerated demineralised water (between 4 and 10°C) to the beaker. Place the beaker on the magnetic stirrer, introduce a follower and slurry the starch.
5. While the starch is being stirred, fill a 100 ml burette with refrigerated caustic soda (1.0 M sodium hydroxide - Merck Nr 109137).
6. When a homogeneous slurry is achieved, with a temperature between 14°C and 16°C, add (in about 90 seconds) 50 ml of refrigerated caustic soda from the burette.
7. Pour the slurry into the Brabender viscometer cup (which has been cooled to 4-15°C in the fridge or a water bath), and insert the measuring head and the sensor.

8. Start the Brabender program in accordance with the instruction manual. At this stage, the temperature of the slurry should be lower than 17 °C.

9. When a temperature of 20 °C is reached, start the chronometer and record the time (in minutes) taken to reach 100 BU.

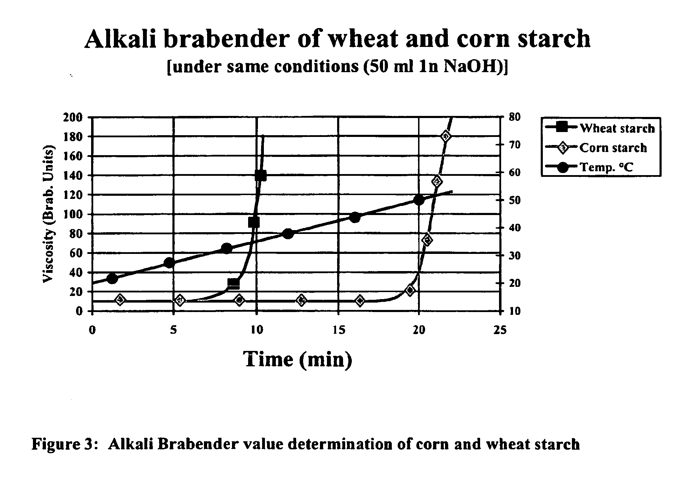

According to this method, the difference in alkali sensitivity between corn and wheat starch can be determined, as illustrated in the graph of Figure 3. From this graph, it is apparent that the AB value of corn starch (20.8) is more than double that of wheat starch (9.9) and that corn starch is thus much less sensitive to alkali than wheat starch.

For the purpose of the present invention, the difference in caustic sensitivity between a carrier starch and a secondary starch can be expressed as follows:

$$\text{(AB value of secondary starch)} - \text{(AB value of carrier starch)}$$

The difference between these two values should be at least 5 min, preferably at least 8 min.

Method 3: Gelatinisation temperature of adhesives

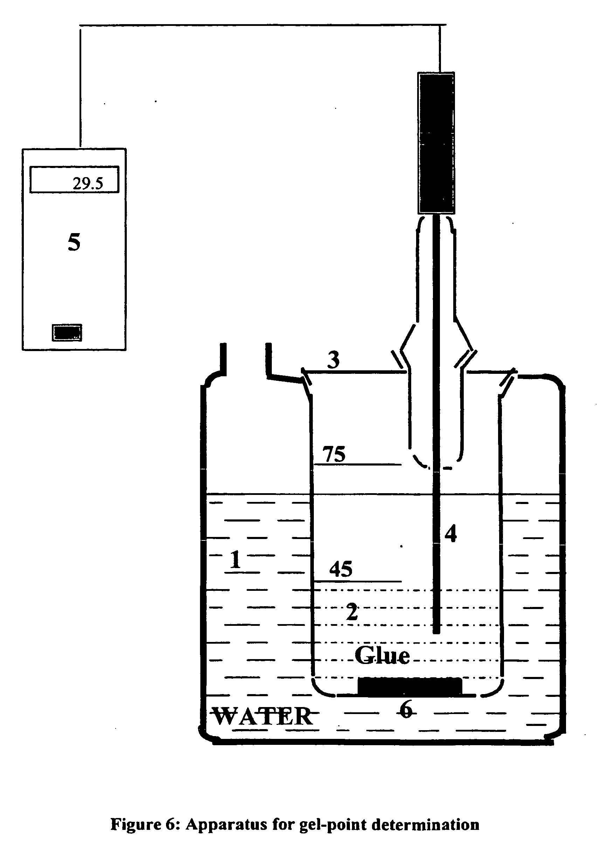

1. Using the apparatus shown in Figure 6, fill outer glass chamber (1), until the upper blue marking line (75) of the internal glass chamber (2), with deionised water.

2. Place a magnetic stirrer (6) into the internal glass chamber (2) then fill (until the lower blue marking (45)) with the corrugating adhesive to be tested.

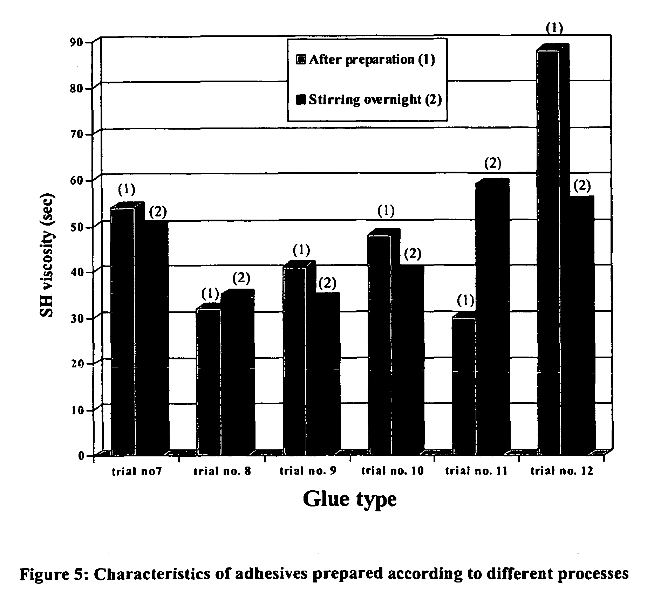

3. Assemble the apparatus as shown in Figure 5 - where (3) represents a glass cover; (4) represents a 145 mm thermoelectric tracer, retained in a fixed position in a glass tube such that its tip is about 25-30 mm from the bottom of the internal glass pot; and (5) represents an indicator for temperature measurement - and place on a heating plate set at exactly 250°C.

4. Switch on indicator (5). During the first few minutes, the temperature will decrease by about 2 - 3 °C because of the cold water in the outer glass chamber. After few minutes, the temperature will start to rise continuously up to the gelatinisation temperature (or "gel point"). Once the gel point is reached, the temperature increase will stop and begin to slightly decrease by about 0.1 to 0.5 °C (at the same time, the magnetic stirrer will stop rotating due to a sudden increase in viscosity). The highest temperature reached before this decrease corresponds to the gel point of the adhesive.

Examples

A number of trials were carried out to compare the characteristics of a standard OBM adhesive (trial 1), a SH-type adhesive (trial 2) and a number of adhesives according to the present invention (trials 3-12). The details of each of these trials is shown in **Tables 1 and 2.**

All the adhesives were prepared with 1050 g batch water and stirred at 930 l/min for an initial 30 min. The SH-type adhesive of trial 2 was prepared with 404.4 g primary water and 629.17 g secondary water. The temperature of the batch water was set at 40°C for all trials except Trial 1 where is was set at 25-30°C.

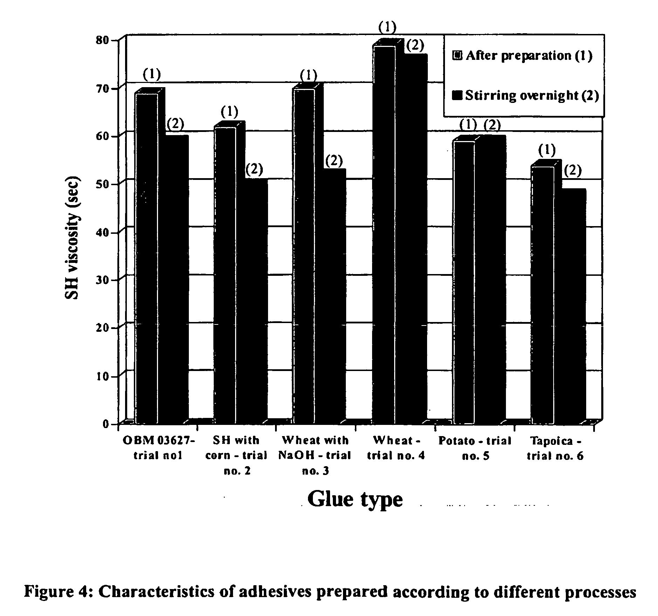

After the initial 30 minute preparation period, Stein Hall viscosity (SHV), Brookfield viscosity (BV) and gelatinisation temperature (GT) were measured. Both Stein Hall and Brookfield viscosity were measured at 30°C. Stein Hall viscosity was measured using a Stein Hall cup and according to standard methodology. Brookfield viscosity was also measured according to standard methodology, using spindle 3 at 100 rpm/min. Gelatinisation temperature of the adhesive was determined using Method 3 as described above. These measurements were then repeated after overnight stirring. The results are set out in Tables 3 and 4 and summarised in Figures 4 and 5.

**Table 3**

|  |  | 1 | 2 | 3 | 4 | 5 | 6 |
|---|---|---|---|---|---|---|---|
| After prep. | SHV (sec) | 69 | 62 | 70 | 79 | 59 | 54 |
|  | BV (mPas) | 444 | 300 | 620 | 680 | 256 | 355 |
|  | GT (°C) | 53.6 | 57.3 | 56.5 | 56.3 | 55.6 | 56 |

(continued)

|  |  | 1 | 2 | 3 | 4 | 5 | 6 |
|---|---|---|---|---|---|---|---|
| Stirring overnight | SHV (sec) | 59 | 50 | 52 | 76 | 59 | 48 |
|  | BV (mPas) | 322 | 220 | 475 | 434 | 256 | 249 |
|  | GT (°C) | 55.5 | 58 | 58.5 | 57.2 | 57 | 56 |

**Table 4**

|  |  | 7 | 8 | 9 | 10 | 11 | 12 |
|---|---|---|---|---|---|---|---|
| After prep. | SHV (sec) | 54 | 32 | 41 | 48 | 30 | 88 |
|  | BV (mPas) | 348 | 158 | 279 | 285 | 153 | 580 |
|  | GT (°C) | 50.9 | 49.8 | 50.1 | 49.5 | 51.8 | 48.8 |
| Stirring overnight | SHV (sec) | 50 | 35 | 34 | 40 | 59 | 55 |
|  | BV (mPas) | 332 | 220 | 240 | 283 | 256 | 474 |
|  | GT (°C) | 53.8 | 53.2 | 52.9 | 53.0 | 54.1 | 53.4 |

From these results, it can be seen that glues prepared according to the present invention have properties that are at the very least comparable to traditional OBM or Stein Hall glues.

**Table 1**

| Trial no. | 1 | 2 | 3 | 4 | | 5 | | 6 | |
|---|---|---|---|---|---|---|---|---|---|
| Solid content | 25 % = 350 g | 25 % = 350 g | 25 % = 350 g | 25 % = 350 g | | 25.2 % = 353.4 g | | 25 %= 400 g | |
| Primary or Carrier starch | -- | C*Gum 03431 | Native wheat starch PT 20002 | Native wheat starch PT 20002 | | Native potato starch 30082 | | Tapioca Starch Amilogill 500 | |
| % | -- | 12 | 12 | 12 | | 10 | | 12 | |
| g | -- | 40.44 | 40.44 | 38.76 | | 32.6 | | 44.4 | |
| C*Gum 03627a | 350 g | -- | -- | -- | | -- | | -- | |
| Secondary starch: C*Gum 03431b | -- | 296.54 g | 296.54 g | 284.25 g | | 293.8 g | | 325 g | |
| Alkali | -- | NaOH solution (33% solids) | NaOH solution (33% solids) | Na$_2$CO$_3$ | Ca(OH)$_2$ | Na$_2$CO$_3$ | Ca(OH)$_2$ | Na$_2$CO$_3$ | Ca(OH)$_2$ |
| g | -- | 24.55 | 24.55 | 13 | 9.1 | 13 | 9.1 | 14.8 | 10.4 |
| % d.s. based on total OBM | -- | 0.58 | 0.58 | 3.71 | 2.6 | 3.69 | 2.6 | 3.70 | 2.6 |

(continued)

| Trial no. | 1 | 2 | 3 | 4 | 5 | 6 |
|---|---|---|---|---|---|---|
| Borax decahydrate (g) | -- | 4.9 | 4.9 | 4.9 | 4.9 | 5.4 |
| % d.s. based on total OBM | -- | | 1.4 | 1.4 | 1.39 | 1.35 |
| [a] C*Gum 03627 is an adhesive one-bag mix available from Cargill [b] C*Gum 03431 is a native corn starch available from Cargill | | | | | | |

**Table 2**

| Trial no. | 7 | | 8 | | 9 | | 10 | | 11 | | 12 | |
|---|---|---|---|---|---|---|---|---|---|---|---|---|
| Solid content | 20 % = 280 g | | 25 % = 350 g | | 25 % = 350 g | | 30 % = 420 g | | 30 % = 420 g | | 30 % = 420 g | |
| Primary or Carrier starch | Native potato starch 30082 | | Native potato starch 30082 | | Native potato starch 30082 | | Native potato starch 30082 | | Native potato starch 30082 | | Native potato starch 30082 | |
| % | 19 | | 14 | | 15 | | 17 | | 12 | | 12 | |
| g | 55 | | 49 | | 52 | | 60 | | 50 | | 50 | |
| C*Gum 03627 | 350 g | | -- | | -- | | -- | | -- | | -- | |
| Secondary starch: C*Gum 20004[c] | 205 g | | 281 g | | 277 g | | 270 g | | 350 g | | 350 g | |
| Alkali | $Na_2CO_3$ | $Ca(OH)_2$ | $Na_2CO_3$ | $Ca(OH)_2$ | $Na_2CO_3$ | $Ca(OH)_2$ | $Na_2CO_3$ | $Ca(OH)_2$ | $Na_2CO_3$ | $Ca(OH)_2$ | $Na_2CO_3$ | $Ca(OH)_2$ |
| g | 9 | 6 | 9.5 | 6.5 | 9.5 | 6.5 | 9 | 6.5 | 9.5 | 6.7 | 10.5 | 7.5 |
| % d.s. based on total OBM | 0.8 | 0.45 | 0.7 | 0.45 | 0.7 | 0.45 | 0.8 | 0.6 | 0.65 | 0.45 | 0.75 | 0.5 |
| Borax decahydrate (g) | 2.8 | | 3.5 | | 3.5 | | 3.5 | | 4.2 | | 4.2 | |
| % d.s. based on total OBM | 1 | | 1 | | 1 | | 1 | | 1 | | 1 | |

c C*Gum 20004 is a native wheat starch available from Cargill

**Claims**

1. A dry adhesive composition comprising a carrier starch, a secondary starch and an alkali **characterised in that** the carrier starch:

   - comprises, on a dry weight basis, less than 50% pre-gelatinised starch; and
   - has a higher alkali sensitivity, calculated according to method 1 as given in the description, than the secondary starch, wherein the difference in alkali sensitivity between the carrier starch and the secondary starch is at least 0.05% NaOH.

2. A dry adhesive composition according to claim 1, **characterised in that** the difference in alkali sensitivity between the carrier starch and the secondary starch is at least 0.1% NaOH,

3. A dry adhesive composition according to any one of the preceding claims, **characterised in that** the carrier starch comprises, on a dry weight basis, less than 40%, preferably less than 30%, more preferably less than 20%, more preferably less than 10%, more preferably less than 5% pre-gelatinised starch.

4. A dry adhesive composition according to any one of the preceding claims, **characterised in that** the carrier starch does not comprise any pre-gelatinised starch.

5. A dry adhesive composition according to any one of the preceding claims, **characterised in that** the secondary starch is selected from the group consisting of corn starch, potato starch, wheat starch and mixtures of two or more thereof.

6. A dry adhesive composition according to any one of the preceding claims, **characterised in that** the carrier starch is selected from the group consisting of wheat starch, potato starch, tapioca starch, barley starch and mixtures of two or more thereof.

7. A dry adhesive composition according to any one of the preceding claims **characterised in that** the carrier starch is a carboxy-methylated starch.

8. A dry adhesive composition according to any one of the preceding claims, **characterised in that** it comprises, on a dry weight basis, 0.5-60%, preferably 5-40%, more preferably 5-25%, more preferably 5-15% carrier starch.

9. A dry adhesive composition according to any one of the preceding claims, **characterised in that** it comprises, on a dry weight basis, 40-99.5%, preferably 75-95%, more preferably 80-90% secondary starch.

10. A dry adhesive composition according to any one of the preceding claims, **characterised in that** the alkali is selected from sodium carbonate, calcium hydroxide, sodium hydroxide or mixtures of two or more thereof.

11. A dry adhesive composition according to any one of the preceding claims, **characterised in that** it comprises, on a dry weight basis, 1-8%, preferably 3-6% alkali.

12. A dry adhesive composition according to any one of the preceding claims, **characterised in that** it further comprises a boron compound, preferably borax decahydrate.

13. A dry adhesive composition according to claim 12, **characterised in that** it comprises, on a dry weight basis, 0.1-3.5%, preferably 1.5-2.5%, more preferably 1.2-1.7% boron compound.

14. Process for preparing an adhesive comprising the steps of adding the composition according to any one of claims 1 to 13 to water and mixing, **characterised in that** sufficient alkali is added to gelatinise the carrier starch but not the secondary starch during mixing.

15. Process for preparing an adhesive comprising the steps of adding a carrier starch, a secondary starch and at least an alkali to water and mixing, **characterised in that** the carrier starch:

   - comprises, on a dry weight basis, less than 50% pre-gelatinised starch; and
   - has a higher alkali sensitivity, calculated according to method 1 as given in the description than the secondary starch, wherein the difference in alkali sensitivity between the carrier starch and the secondary starch is at least 0.05% NaOH;

and **in that** sufficient alkali is added to gelatinise the carder starch but not the secondary starch.

16. Process according to claim 15, **characterised in that** the carrier starch and secondary starch are pre-mixed.

17. Process according to claim 15 or claim 16, **characterised in that** the alkali is selected from sodium carbonate, calcium hydroxide, sodium hydroxide or mixtures of two or more thereof.

18. Process according any one of claims 15 to 17, **characterised in that**, on a dry weight basis, 1-8%, preferably 3-6% alkali is added

19. Process according to any one of claims 15 to 18, **characterised in that** it further comprises adding a boron compound, preferably borax decahydrate.

20. Process according to claim 19, characterised, on a dry weight basis, 0.1-3.5%, preferably 1.5-2.5%, more preferably 1.2-1.7% boron compound is added.

21. Process according to any one of claims 15 to 20, **characterised in that** the carrier and secondary starches are mixed with the water before the alkali and/or the boron compounds are added.

22. Process according to any one of claims 15 to 21, **characterised in that** the water is pre-heated to 20-60°C, preferably 30-50°C, more preferably 35-45°C, more preferably 40-45°C.

23. Process according to any one of claims 15 to 22, **characterised in that** the carrier starch, secondary starch, alkali and water are mixed for 10 min to 1 hour, preferably for 20-40 min, more preferably for approximately 30 minutes.

24. Adhesive prepared according to the process of any one of claim 15-23.

25. Adhesive according to claim 24, wherein the adhesive has a total dry substance of 15 to 40% by weight.

26. Adhesive according to either claim 24 or claim 25 for use in corrugating and/or paper processing.

27. Board materials prepared using the adhesive of any one of claims 24 to 26.


**Patentansprüche**

1. Trockene Klebstoffzusammensetzung, die eine Trägerstärke, eine Sekundärstärke und ein Alkali umfasst, die **dadurch gekennzeichnet ist, dass** die Trägerstärke:

   - weniger als 50% vorgelierte Stärke, bezogen auf das Trockengewicht, umfasst; und
   - eine größere Alkaliempfindlichkeit aufweist, berechnet nach der Methode 1 wie in der Patentbeschreibung angegeben, als die Sekundärstärke, worin der Unterschied in der Alkaliempfindlichkeit zwischen der Trägerstärke und der Sekundärstärke mindestens 0,05 % NaOH beträgt.

2. Trockene Klebstoffzusammensetzung nach Anspruch 1, die **dadurch gekennzeichnet ist, dass** der Unterschied in der Alkaliempfindlichkeit zwischen der Trägerstärke und der Sekundärstärke mindestens 0,1 % NaOH beträgt.

3. Trockene Klebstoffzusammensetzung nach einem der vorstehenden Ansprüche, die **dadurch gekennzeichnet ist, dass** die Trägerstärke, bezogen auf das Trockengewicht, weniger als 40%, bevorzugt weniger als 30 %, bevorzugter weniger als 20 %, bevorzugter weniger als 10 %, bevorzugter weniger als 5 % vorgelierte Stärke umfasst.

4. Trockene Klebstoffzusammensetzung nach einem der vorstehenden Ansprüche, die **dadurch gekennzeichnet ist, dass** die Trägerstärke keine vorgelierte Stärke umfasst.

5. Trockene Klebstoffzusammensetzung nach einem der vorstehenden Ansprüche, die **dadurch gekennzeichnet ist,**

**dass** die Sekundärstärke aus der Gruppe ausgewählt ist, die aus Maisstärke, Kartoffelstärke, Weizenstärke und Mischungen aus zwei oder mehr davon besteht.

**6.** Trockene Klebstoffzusammensetzung nach einem der vorstehenden Ansprüche, die **dadurch gekennzeichnet ist, dass** die Trägerstärke aus der Gruppe ausgewählt ist, die aus Weizenstärke, Kartoffelstärke, Tapiokastärke, Gerstenstärke und Mischungen aus zwei oder mehr davon besteht.

**7.** Trockene Klebstoffzusammensetzung nach einem der vorstehenden Ansprüche, die **dadurch gekennzeichnet ist, dass** die Trägerstärke carboxymethylierte Stärke ist.

**8.** Trockene Klebstoffzusammensetzung nach einem der vorstehenden Ansprüche, die **dadurch gekennzeichnet ist, dass** sie, bezogen auf das Trockengewicht, 0,5-60 %, bevorzugt 5-40 %, bevorzugter 5-25 %, bevorzugter 5-15 % Trägerstärke umfasst.

**9.** Trockene Klebstoffzusammensetzung nach einem der vorstehenden Ansprüche, die **dadurch gekennzeichnet ist, dass** sie, bezogen auf das Trockengewicht, 40-99.5 %, bevorzugt 75-95 %, bevorzugter 80-90 % Sekundärstärke umfasst.

**10.** Trockene Klebstoffzusammensetzung nach einem der vorstehenden Ansprüche, die **dadurch gekennzeichnet ist, dass** das Alkali aus Natriumcarbonat, Calciumhydroxid, Natriumhydroxid oder Mischungen aus zwei oder mehr davon ausgewählt ist.

**11.** Trockene Klebstoffzusammensetzung nach einem der vorstehenden Ansprüche, die **dadurch gekennzeichnet ist, dass** sie, bezogen auf das Trockengewicht, 1-8 %, bevorzugt 3-6 % Alkali umfasst.

**12.** Trockene Klebstoffzusammensetzung nach einem der vorstehenden Ansprüche, die **dadurch gekennzeichnet ist, dass** sie weiter eine Borverbindung, bevorzugt Borax-Decahydrat umfasst.

**13.** Trockene Klebstoffzusammensetzung nach Anspruch 12, die **dadurch gekennzeichnet ist, dass** sie, bezogen auf das Trockengewicht, 0,1-3,5 %, bevorzugt 1,5-2,5 %, bevorzugter 1,2-1,7 % der Borverbindung umfasst.

**14.** Verfahren zur Herstellung eines Klebstoffs, das die Schritte des Zugebens der Zusammensetzung nach einem der Ansprüche 1 bis 13 zu Wasser und des Mischens umfasst, das **dadurch gekennzeichnet ist, dass** ausreichend Alkali zugegegen wird, um die Trägerstärke, doch nicht die Sekundärstärke, während des Mischens zu gelieren.

**15.** Verfahren zur Herstellung eines Klebstoffs, das die Schritte des Zugebens einer Trägerstärke, einer Sekundärstärke und mindestens eines Alkalis zu Wasser und des Mischens umfasst, das **dadurch gekennzeichnet ist, dass** die Trägerstärke:

- weniger als 50% vorgelierte Stärke, bezogen auf das Trockengewicht, umfasst; und
- eine größere Alkaliempfindlichkeit aufweist, berechnet nach der Methode 1 wie in der Patentbeschreibung angegeben, als die Sekundärstärke, worin der Unterschied in der Alkaliempfindlichkeit zwischen der Trägerstärke und der Sekundärstärke mindestens 0,05 % NaOH beträgt;

und dadurch, dass ausreichend Alkali zugegegen wird, um die Trägerstärke, doch nicht die Sekundärstärke, zu gelieren.

**16.** Verfahren nach Anspruch 15, das **dadurch gekennzeichnet ist, dass** die Trägerstärke und Sekundärstärke vorgemischt werden.

**17.** Verfahren nach Anspruch 15 oder Anspruch 16, das **dadurch gekennzeichnet ist, dass** das Alkali aus Natriumcarbonat, Calciumhydroxid, Natriumhydroxid oder Mischungen aus zwei oder mehr davon ausgewählt ist.

**18.** Verfahren nach einem der Ansprüche 15 bis 17, das **dadurch gekennzeichnet ist, dass**, bezogen auf das Trockengewicht, 1-8 %, bevorzugt 3-6 % Alkali zugegeben werden.

**19.** Verfahren nach einem der Ansprüche 15 bis 18, das **dadurch gekennzeichnet ist, dass** es weiter das Zugeben einer Borverbindung, bevorzugt Borax-Decahydrat umfasst.

**20.** Verfahren nach Anspruch 19, dass **dadurch gekennzeichnet ist, dass**, bezogen auf das Trockengewicht, 0,1-3,5 %, bevorzugt 1,5-2,5 %, bevorzugter 1,2-1,7 % der Borverbindung zugegeben werden.

**21.** Verfahren nach einem der Ansprüche 15 bis 20, das **dadurch gekennzeichnet ist, dass** die Träger- und Sekundärstärken mit dem Wasser gemischt werden bevor das Alkali und/oder die Borverbindungen zugegeben werden.

**22.** Verfahren nach einem der Ansprüche 15 bis 21, das **dadurch gekennzeichnet ist, dass** das Wasser auf 20-60°C, bevorzugt 30-50°C, bevorzugter 35-45°C, bevorzugter 40-45°C vorgewärmt wird.

**23.** Verfahren nach einem der Ansprüche 15 bis 22, das **dadurch gekennzeichnet ist, dass** die Trägerstärke, Sekundärstärke, das Alkali und Wasser für 10 min bis 1 Stunde, bevorzugt für 20-40 min, bevorzugter für ungefähr 30 Minuten gemischt werden.

**24.** Klebstoff, der nach dem Verfahren nach einem der Ansprüche 15-23 hergestellt wird.

**25.** Klebstoff nach Anspruch 24, worin der Klebstoff eine gesamte Trockensubstanz von 15 bis 40 Gewichts-% aufweist.

**26.** Klebstoff nach Anspruch 24 oder Anspruch 25 zur Verwendung bei der Wellpappen- und/oder Papierbearbeitung.

**27.** Pappenmaterialien, die unter Verwendung des Klebstoffs nach einem der Ansprüche 24 bis 26 hergestellt werden.


**Revendications**

**1.** Composition adhésive sèche comprenant un amidon de support, un amidon secondaire et un alcali, **caractérisée en ce que** l'amidon de support :

- comprend, sur la base d'un poids à sec, moins de 50 % d'amidon pré-gélatinisé ; et
- possède une sensibilité aux alcalis, calculée selon un procédé 1 tel que donné dans la description, supérieure à l'amidon secondaire, dans laquelle la différence en termes de sensibilité aux alcalis entre l'amidon de support et l'amidon secondaire est d'au moins 0,05 % de NaOH.

**2.** Composition adhésive sèche selon la revendication 1, **caractérisée en ce que** la différence en termes de sensibilité aux alcalis entre l'amidon de support et l'amidon secondaire est d'au moins 0,1 % de NaOH.

**3.** Composition adhésive sèche selon l'une quelconque des revendications précédentes, **caractérisée en ce que** l'amidon de support comprend, sur la base d'un poids à sec, moins de 40 %, de préférence moins de 30 %, plus préférablement moins de 20 %, plus préférablement moins de 10 %, plus préférablement moins de 5 % d'amidon pré-gélatinisé.

**4.** Composition adhésive sèche selon l'une quelconque des revendications précédentes, **caractérisée en ce que** l'amidon de support ne comprend aucun amidon pré-gélatinisé.

**5.** Composition adhésive sèche selon l'une quelconque des revendications précédentes, **caractérisée en ce que** l'amidon secondaire est sélectionné parmi le groupe constitué d'amidon de maïs, de fécule de pomme de terre, d'amidon de blé et de mélanges d'au moins deux parmi ceux-ci.

**6.** Composition adhésive sèche selon l'une quelconque des revendications précédentes, **caractérisée en ce que** l'amidon de support est sélectionné parmi le groupe constitué d'amidon de blé, de fécule de pomme de terre, de fécule de manioc, d'amidon d'orge et de mélanges d'au moins deux parmi ceux-ci.

**7.** Composition adhésive sèche selon l'une quelconque des revendications précédentes, **caractérisée en ce que** l'amidon de support est un amidon carboxyméthylé.

**8.** Composition adhésive sèche selon l'une quelconque des revendications précédentes, **caractérisée en ce qu'**elle comprend, sur la base d'un poids à sec, 0,5 - 60 %, de préférence 5 - 40 %, plus préférablement 5 - 25 %, plus préférablement 5 - 15 % d'amidon de support.

**9.** Composition adhésive sèche selon l'une quelconque des revendications précédentes, **caractérisée en ce qu'**elle comprend, sur la base d'un poids à sec, 40 - 99,5 %, de préférence 75 - 95 %, plus préférablement 80 - 90 % d'amidon secondaire.

**10.** Composition adhésive sèche selon l'une quelconque des revendications précédentes, **caractérisée en ce que** l'alcali est sélectionné parmi du carbonate de sodium, de l'hydroxyde de calcium, de l'hydroxyde de sodium ou des mélanges d'au moins deux parmi ceux-ci.

**11.** Composition adhésive sèche selon l'une quelconque des revendications précédentes, **caractérisée en ce qu'**elle comprend, sur la base d'un poids à sec, 1 - 8 %, de préférence 3 - 6 % d'alcali.

**12.** Composition adhésive sèche selon l'une quelconque des revendications précédentes, **caractérisée en ce qu'**elle comprend en outre un composé de bore, de préférence du décahydrate de borax.

**13.** Composition adhésive sèche selon la revendication 12, **caractérisée en ce qu'**elle comprend, sur la base d'un poids à sec, 0,1 - 3,5 %, de préférence 1,5 - 2,5 %, plus préférablement 1,2 - 1,7 % de composé de bore.

**14.** Processus de préparation d'un adhésif comprenant les étapes consistant à ajouter la composition selon l'une quelconque des revendications 1 à 13 à de l'eau et à mélanger, **caractérisé en ce qu'**un alcali en quantité suffisante est ajouté pour gélatiniser l'amidon de support mais pas l'amidon secondaire pendant le mélange.

**15.** Processus de préparation d'un adhésif comprenant les étapes consistant à ajouter un amidon de support, un amidon secondaire et au moins un alcali à de l'eau et à mélanger, **caractérisé en ce que** l'amidon de support :

- comprend, sur la base d'un poids à sec, moins de 50 % d'amidon pré-gélatinisé ; et
- possède une sensibilité aux alcalis, calculée selon un procédé 1 tel que donné dans la description, supérieure à l'amidon secondaire, dans laquelle la différence en termes de sensibilité aux alcalis entre l'amidon de support et l'amidon secondaire est d'au moins 0,05 % de NaOH ;

et **en ce qu'**un alcali en quantité suffisante est ajouté pour gélatiniser l'amidon de support mais pas l'amidon secondaire.

**16.** Processus selon la revendication 15, **caractérisé en ce que** l'amidon de support et l'amidon secondaire sont pré-mélangés.

**17.** Processus selon la revendication 15 ou la revendication 16, **caractérisé en ce que** l'alcali est sélectionné parmi du carbonate de sodium, de l'hydroxyde de calcium, de l'hydroxyde de sodium ou des mélanges d'au moins deux parmi ceux-ci.

**18.** Processus selon l'une quelconque des revendications 15 à 17, **caractérisé en ce que**, sur la base d'un poids à sec, 1 - 8 %, de préférence 3 - 6 % d'alcali sont ajoutés.

**19.** Processus selon l'une quelconque des revendications 15 à 18, **caractérisé en ce qu'**il comprend en outre l'étape consistant à ajouter un composé de bore, de préférence du décahydrate de borax.

**20.** Processus selon la revendication 19, **caractérisé en ce que**, sur la base d'un poids à sec, 0,1 - 3,5 %, de préférence 1,5 - 2,5 %, plus préférablement 1,2 - 1,7 % de composé de bore sont ajoutés.

**21.** Processus selon l'une quelconque des revendications 15 à 20, **caractérisé en ce que** les amidons de support et secondaire sont mélangés avec l'eau avant que l'alcali et/ou les composés de bore soi(en)t ajouté(s).

**22.** Processus selon l'une quelconque des revendications 15 à 21, **caractérisé en ce que** l'eau est préchauffée à 20 - 60° C, de préférence à 30 - 50° C, plus préférablement 35 - 45° C, plus préférablement 40 - 45° C.

**23.** Processus selon l'une quelconque des revendications 15 à 22, **caractérisé en ce que** l'amidon de support, l'amidon secondaire, l'alcali et l'eau sont mélangés pendant de 10 mn à 1 heure, de préférence pendant 20 - 40 mn, plus préférablement pendant environ 30 minutes.

**24.** adhésif préparé selon le processus selon l'une quelconque des revendications 15 à 23.

**25.** Adhésif selon la revendication 24, dans lequel l'adhésif possède une substance sèche totale de 15 à 40 % en poids.

**26.** Adhésif selon soit la revendication 24, soit la revendication 25, à utiliser pour faire du carton ondulé et/ou pour le traitement du papier.

**27.** Matériaux en carton préparés en utilisant l'adhésif selon l'une quelconque des revendications 24 à 26.

Figure 1: Alkali sensitivity of different starches at 25°C

Figure 2: Alkali sensitivity of different starches at
varying temperature and alkali concentration

# Alkali brabender of wheat and corn starch
## [under same conditions (50 ml 1n NaOH)]

Figure 3: Alkali Brabender value determination of corn and wheat starch

**Figure 4: Characteristics of adhesives prepared according to different processes**

**Figure 5: Characteristics of adhesives prepared according to different processes**

**Figure 6: Apparatus for gel-point determination**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3012470 A
- CN 1174223 A

### Non-patent literature cited in the description

- **KOFLER.** Starch: Chemistry and Technology. 1984, 668